# EUROPEAN PATENT SPECIFICATION

(11) **EP 1 210 844 B1**
(45) Date of publication and mention of the grant of the patent: **09.07.2003**
(21) Application number: 00958783.3
(22) Date of filing: 05.09.2000
(51) Int. Cl.: H04R 1/00

(54) **SENSOR ARRAY MOUNTING**
MONTAGE EINER SENSORBAUGRUPPE
MONTAGES ISOLATEURS D'ENERGIE ET DEFINISSANT DES EMPLACEMENTS

(30) Priority: 08.09.1999 GB 9921142
(43) Date of publication of application: 05.06.2002
(73) Proprietor: Snap-On Equipment Limited, Norfolk PE30 5DD (GB)
(72) Inventor: JONES, Barbara Lynn, Kings Lynn Norfolk PE30 5UJ (GB)
(74) Representative: Archer, Philip Bruce
(86) International application number: PCT/GB00/03398
(87) International publication number: WO 01/019131

(56) References cited:
- WO-A-93/04381
- US-A- 3 913 187
- US-A- 4 534 572
- US-A- 4 729 534

## Description

This invention relates to position-defining and energy-isolating mountings. In particular it relates to mountings used to mount acoustic emitters and/or detectors within a system used for three-dimensional coordinate determination adapted, in particular, for automotive crash repair and diagnostics.

An example of the application of the invention is in vehicle shape-determination systems of the kind disclosed in WO 93/04381, in which the present invention provides a mounting of the kind required for the array of microphones (18) which are mounted with respect to a beam (10) for use in the manner briefly disclosed and illustrated in data items (54) and (57) on the front page of the above-identified WO publication.

A similar such vehicle shape determination system is also described in European Patent EP 0,244,513 (and corresponding US patent US 4,811,250). In EP 0 224 513 B1 (Applied Power Inc/Steber) a system for acoustic-based three-dimensional coordinate analysis as applied to automotive vehicles is described. In this system acoustic signals from transmitter means at a series of defined locations are received by acoustic receiver means. The receiver/transitter means are located at a series temporarily fixed separated locations throughout a series of measurements, and signals received are sent to data processing means whereby a time-based determination of the coordinates of each of the reference locations is made by a calculation technique utilising the acoustic signal transmission time differential for two transmitters at each location of known spacing from each other at that location, and by reference to a simple triangulation technique. There are also numerous other published specifications and examples of such systems in which arrays of emitters/sensors, are mounted on a fixed frame and interact with cooperating sensors/emitters which are positioned at reference positions relative to the shape to be determined, with data processing means interpreting the signals sensed by the sensors in order to determine the relative positional information.

In the case of existing mountings for the emitters and/or detectors the kind used in the above techniques with which the present invention is concerned, such as miniature microphones, the current assumption is that in such mountings a degree of vibration damping should be provided and that the microphones should be vibration isolated from the beam of frame within which they are placed. In addition the miniature microphones require accurate placement, ease of mounting, ease of dismounting or replacement, and a degree of physical shielding from impact or similar damage. These requirements should all be provided and met by the mounting. Accordingly the currently available solution to this interplay of (to some extent) conflicting physical requirements on the mounting has been to use a mounting of a two-piece construction in which an elastomeric bushing envelops the microphone itself and serves to provide vibration isolation of the microphone and damage protection. Then, in order to meet the requirement for relatively accurate position definition for the microphone there is additionally provided a metallic collar around the elastomeric bushing. The collar serves to engage the beam on which the array of microphones are mounted and thus serves to position relatively accurately the collar itself with respect to the beam and through the interaction (via adherence) of the collar with the elastomeric bushing, the collar exerts a degree of position control on the microphone itself.

With such a mounting insertion of the microphone into the bushing and collar assembly is achieved by means of an end-insertion technique in which a projecting length of microphone conductor (and associated electrical shielding) is inserted through the bushing and through its associated end cable holder, and is then caused to fit snugly into the main body of the bushing. There is a further means for achieving this by tensioning the conductor. In other words, the microphone is pulled into its bushing by its lead. This can readily cause damage to the electrical connection to the microphone.

Other shortcomings of the previously-used microphone mounting system include the lack of accuracy of positional and/or orientational placement of the microphone due to the inherent ineffective transmission of position information through the elastomeric bushing from the mounting collar. Additionally, the mounting process is relatively difficult due to frictional effects arising during the endwise insertion process, particularly if the assembly person is conscious of the need not to damage the electrical connections to the microphone.

There is also a need for a provision of means, in the case of mountings of the general kind disclosed herein, for accommodating a degree of non-circularity (such as ovality) in the mounting openings provided in the support for the acoustic emitter or detector or other sensor, without prejudicing the accuracy of mounting. In general terms, the matching of a circular fitting to a circular receptor is not readily achievable in practical circumstances in relation to field-used articles of this kind without difficulties and/or costs and some improvements in this respect are needed.

It is noted that vibration damping and isolating mounting arrangements are used in other fields and to mount other components. Such arrangements are described in, the following published patent specifications: WO 98/12453, GB 2046,401, GB 1,498,891; GB 1,289,746; GB 845,891; US 5,013,166; and GB 1,169,688. These prior arrangements all use an elastomeric material, predominantly rubber, within the mounting in order to sufficiently isolate the mounted component from the structure to which it is attached. In a further prior patent GB 1,178,927 the mounting provides the required degree of resilience, as would be expected from an elastomeric material, by using sufficiently thin resilient arms members/straps to support the mounted component.

Whilst such arrangements are similar to the above described current mounting of the microphones, in that they provide vibration isolation using elastomeric materials (or mimic the resilience of such materials), it should be recognised that the requirements for mounting a sensitive electronic component like a microphone are very different. Also the specific requirements of the mounting dictated by above system within which the microphone forms a key part, are very different from the components and arrangements with which these prior mounting patents are concerned. The prior patents relating to mounting structural floor panels, torsion bars and pipes etc.

An object of the present invention is to provide a mounting method and apparatus, particularly applicable to the mounting of acoustic sensors and emitters, but which may have novelty and/or inventive step in relation to features which are wide enough to embrace mountings usable outside the field of acoustic emitters and sensors, as identified above, and providing improvements in relation to one or more of the factors identified above and/or improvements generally therein.

According to the invention there is provided a method and apparatus for mounting an acoustic emitter or detector, or other sensor, as defined in the accompanying claims.

In embodiments described below there is provided a method and apparatus wherein a mounting for a sensor such as an acoustic emitter or detector, provides location definition and acoustic energy isolation by means of a single unitary structure comprising a non-elastomeric polymeric plastics material.

It has unexpectedly been found that such a mounting provides sufficient isolation of the sensor, in particular microphone, within the system with which the invention is concerned, for the system to operate satisfactorily. This represents one important aspect of the present invention and is based upon the apparent unexpected discovery that, in the systems with which the invention is concerned, the microphone or sensor does not have to be mounted so that it is vibration isolated from the beam or frame structure to which it is mounted. This is completely contrary to the understanding of the requirements and practice hitherto. Alternatively and/or in addition it is based upon the unexpected related further discovery that a relatively high (or at least sufficient for the requirements of the systems with which the invention is concerned) degree of energy isolation as required so that the sensors (microphones) are substantially unaffected and operate correctly, can be achieved without the need to employ elastomeric materials (as are currently used in such mountings). The non-elastomeric plastics material reducing the level of energy transmission to acceptable limits, both in relation to acoustic or certain other energy forms present.

More specifically, in the embodiments we found that non-elastomeric polymers such as polypropylene provide at the acoustic frequencies discussed below a required level of acoustic isolation, while not possessing the positional shortcomings of elastomeric polymers.

For the avoidance of doubt, it needs to be said that substantially all solid materials have a degree of resilient deflectability which is measurable and well known. For the purposes of the present invention this fact is not relevant since the elastomeric polymers with which the embodiments of the present invention are contrasted are those such as natural and synthetic rubbers for which the level of resilient deflectability is on a substantially different scale.

In the embodiments of the present invention, the adoption of a non-elastomeric plastics polymer to provide the unexpectedly high level of acoustic energy isolation (and indeed isolation with respect to other relevant energy forms as discussed above) leads to the resultant advantage that the polymer itself simultaneously provides that level of accurate position-definition which the microphone placement and mounting within the above-identified shape determining systems requires. A non-elastomeric material providing a more accurate mounting as compared generally to one in which an elastomeric material is used. The combination of energy isolation and position definition represents a significant step forward with respect to the previously accepted requirement for a two-piece structure with its attendant penalties in terms of cost and ease of assembly.

Also, in the embodiments disclosed below there is provided bushing means for the microphone or other sensor or emitter which provides a snap-fit or clip-fit structure which serves to engage and grip the sensor or emitter on opposite sides thereof, and likewise engages or grips the associated cable or the like, thereby mechanically interconnecting the two and serving to provide a strengthened link between these parts of the apparatus whereby the previous damage-causing tugging on the lead or connector no longer causes harm. To a certain extent the beneficial use of such and arrangement is due, at least in part, to the ability to use a different type of mounting using a plastics material in a unitary structure rather than needing to use an elastomeric material within the mounting.

In the embodiments a mounting for an acoustic emitter or detector which removably mounts such with respect to a support comprises a non-elastomeric polymeric plastic bushing which is adapted to be a press fit into a complimentary mounting opening in a support therefor, and the bushing provides contact at a plurality of at least three spaced locations around said opening, whereby said bushing can accommodate a degree of ovality of said mounting opening, while nevertheless accurately defining the mounted position of said emitter or detector with respect to said support. In the embodiments the contact regions of the bushing are arcuate in form and in fact four are provided in the illustrated embodiments.

By providing a snap-fit or clip-fit mounting which engages and grips the emitter or sensor and its lead there is not only provided the mechanical advantage identified above but also a significant simplification of the assembly and disassembly method since the snap-fit or clip-fit assembly technique is reversible and disassembly is just as easily achieved. The need for endwise insertion and the accompanying delays and potential damage causation is also eliminated by the side-wise (as opposed to end-wise) assembly technique provided by the use of this a mounting.

Also in the embodiments, the snap-fit bushing is provided as a one-piece assembly in which two halves are interconnected by hinge-means permitting ready (and accurate) cooperation for snap or clip fitting and unfitting as needed. In addition, there may be provided on the mounting a visible orientation mark so that the bushing or collet when installed on its beam or other structure is at a predetermined orientation with respect to it.

In the embodiments, in addition to polypropylene other non-elastomeric polymeric materials may be employed such as nylon derivatives, acetyl and ABS and other non-elastomers.

The present invention is not limited in its application to the specific utility described hereto and provides significant advantages in relation to the mounting acoustic emitter and/or detectors in other similar systems and generally.

Furthermore the mounting can also be applied used with like emitters or sensors of various kinds used in systems of the type described in the preferred embodiment and more generally. Other such kinds of sensors or emitters include thermal and electrical and optical sensors, particularly for electronic measuring equipment, in which a facility for ease of mounting and/or dismounting and accompanied by a satisfactory level of position-definition when mounted, in combination with isolation (to the degree necessary for the particular practical application) from the transmission to or from the mounted sensor or emitter of acoustic or electrical or other energy.

In the case of the specific embodiment disclosed below, the mounting provides location definition and ease of mounting and dismounting together with a satisfactory level of isolation with respect to acoustic energy.

Embodiments of the invention will now be described by way of example with reference to the accompanying drawings in which:
Figure 1 is a schematic illustration of a three dimensional co-ordinate determination system for automotive crash repair and diagnostics with which the invention is used;
Figure 1a is a schematic illustrative view on arrow II of the schematic illustration of figure 1;
Figure 2 is a more detailed perspective view of the the beam or frame upon which the acoustic detectors of the system of figure 1 are disposed;
Figure 3 shows a side elevation of a mounting assembly for an acoustic detector in accordance with the present invention;
Figure 4 is a plan view of the assembly of figure 3, as viewed on section H-H of figure 3;
Figure 5 is a more detailed side elevation of the assembly and is similar to figure 3;
Figure 6 is a longitudinal section through the assembly along, and as viewed, on section E-E of figure 4;
Figure 7 is a cross sectional view of the assembly on section A-A of figure 6;
Figure 8 is a similar cross sectional view of the assembly on section B-B of figure 6;
Figure 9 is a cross sectional view of the assembly on section C-C of figure 4;
Figure 10 is a similar cross sectional view of the assembly on section D-D of figure 4;
Figure 11 is a sectional view of the assembly on section F-F of figure 5; and
Figure 12 is an end view of the assembly on arrow G of figure 5.

A system for three-dimensional coordinate determination adapted, in particular, for automotive crash repair and diagnostics, within which the present invention may be applied, is described in EP 0 244 513 B1. A similar system is also described in WO 93/04381.

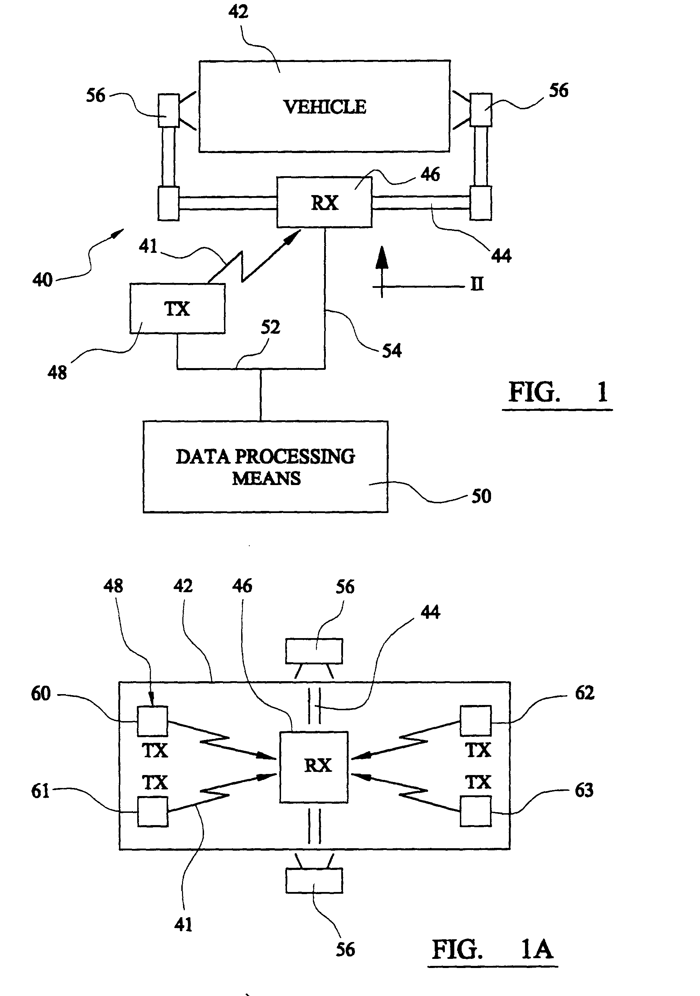

Apparatus 40 for three-dimensional coordinate determination adapted for automotive crash repair and diagnostics is shown in figures 1 and 1a. The apparatus 40 comprises transmitter means 48, receiver means 46 and data processing means 50 adapted to process data derived from the transmission of an energy signal 41 between said transmitter and receiver means 46, 48, to determine information with respect to the three-dimensional coordinates of one of said transmitter means and said receiver means 48, 46 (in this case the transmitter means 48), with respect to the other thereof (in this case the receiver means 46).

In use, the apparatus 40 is used to carry out a series of coordinate data evaluation steps in which one of the transmitter and receiver means 46, 48 (in this case the transmitter means 48) is applied to a series of identifiable locations 60,61,62,63,64 (see Fig 1A). In Fig 1A only four such locations have been shown, but in practice many more such locations are employed, as disclosed for example in the above-mentioned EP 513 B1 specification. Energy signals 41 are transmitted from transmitter means 48 to receiver means 46 while data evaluation steps are carried out. Usually, the steps of transmission and receiving and data evaluation are carried out from the locations 60 to 64 in sequence. It is an important requirement of the process that the receiver means 46 is maintained at a constant position with respect to automotive vehicle 42 throughout these steps.

As also shown in Figs 1 and 1A, the apparatus 40 further comprises a frame or the like structure 44. In Fig 1, the frame or the like structure 44 extends below the body of vehicle 30, but above ground level, not shown in Fig 1 on which the vehicle is supported by its ground wheels (also not shown).The frame or the like structure 44 provides a fixed and stable mounting structure on which the receiver means 46 (acoustic microphone or camera) are mounted so as to be able to communicate with transmitter means 48 via energy signals 41, as indicated in Fig 1A.

The frame or the like structure 44 comprises a transverse frame member. The frame may be fixed to the vehicle 42 via attachment means features 56 (for example arms and suction cups) in order to locate the frame 44 relative to the vehicle 42 during the measurements.

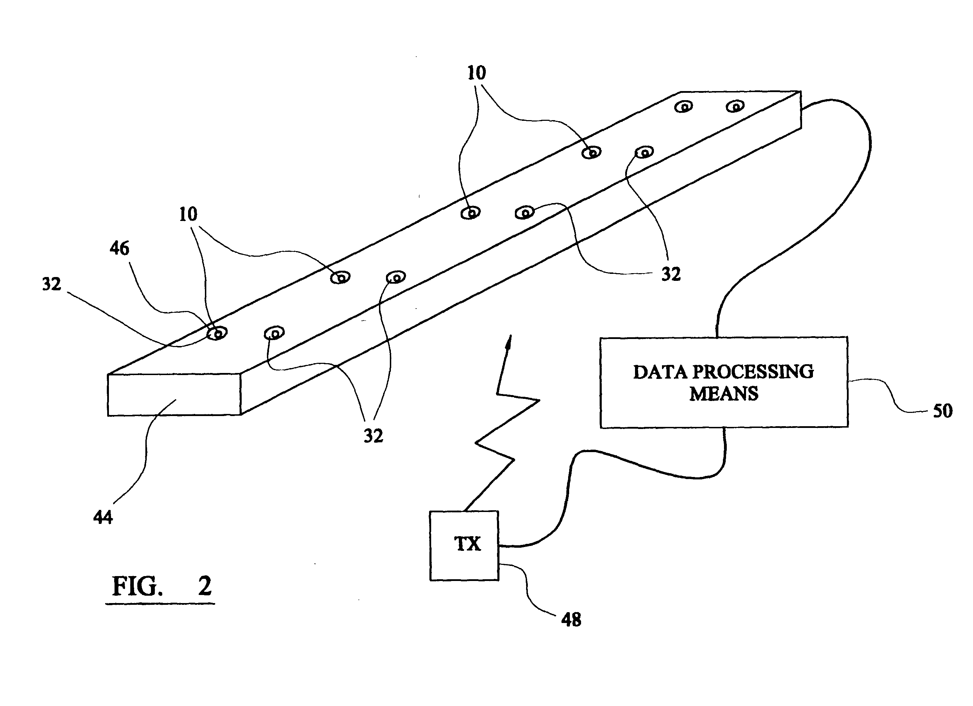

As shown in figure 2, the receiver means 46 are mounted at a number of positions disposed along the length of the frame 44. Specifically a series of holes or apertures 32 are defined and provided within the frame 44 at predetermined positions. The receiving means 46 are mounted within these holes 32 via a suitable mounting arrangement 10.

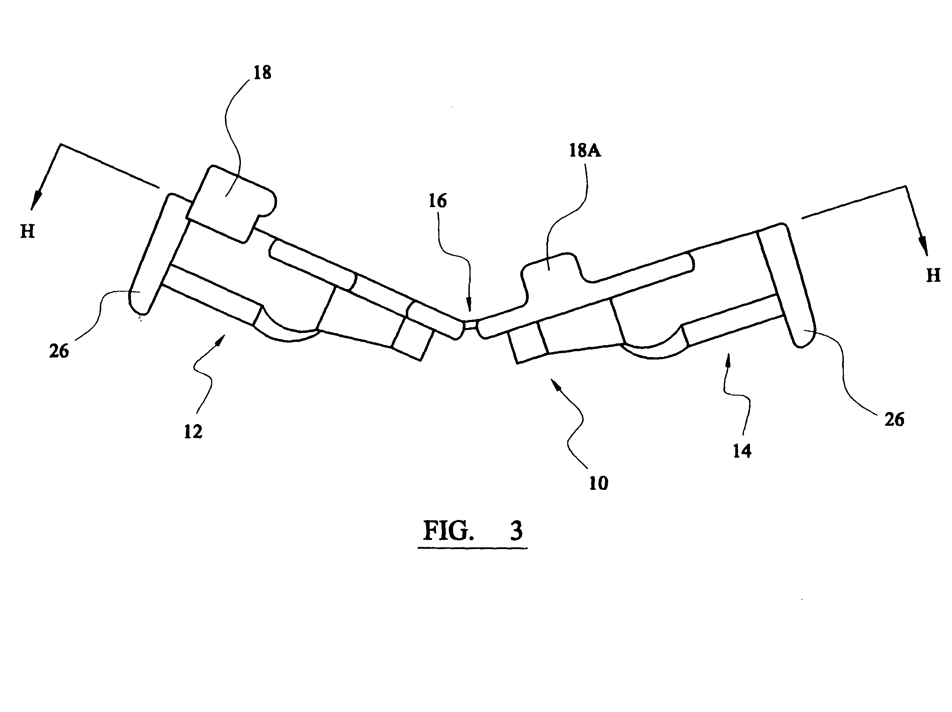

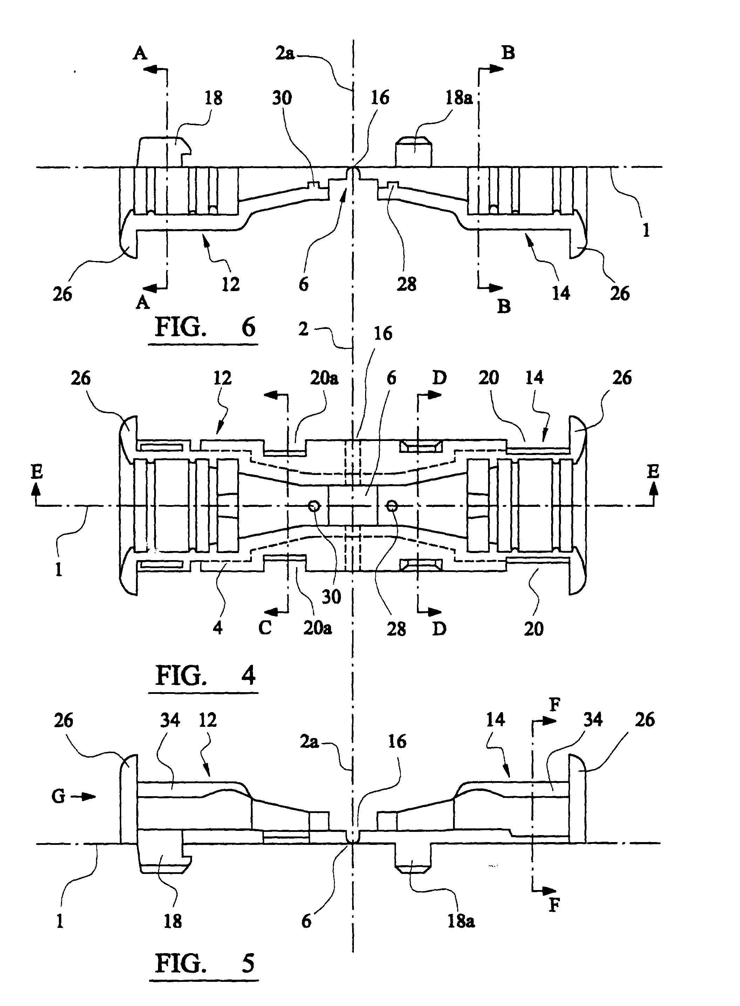

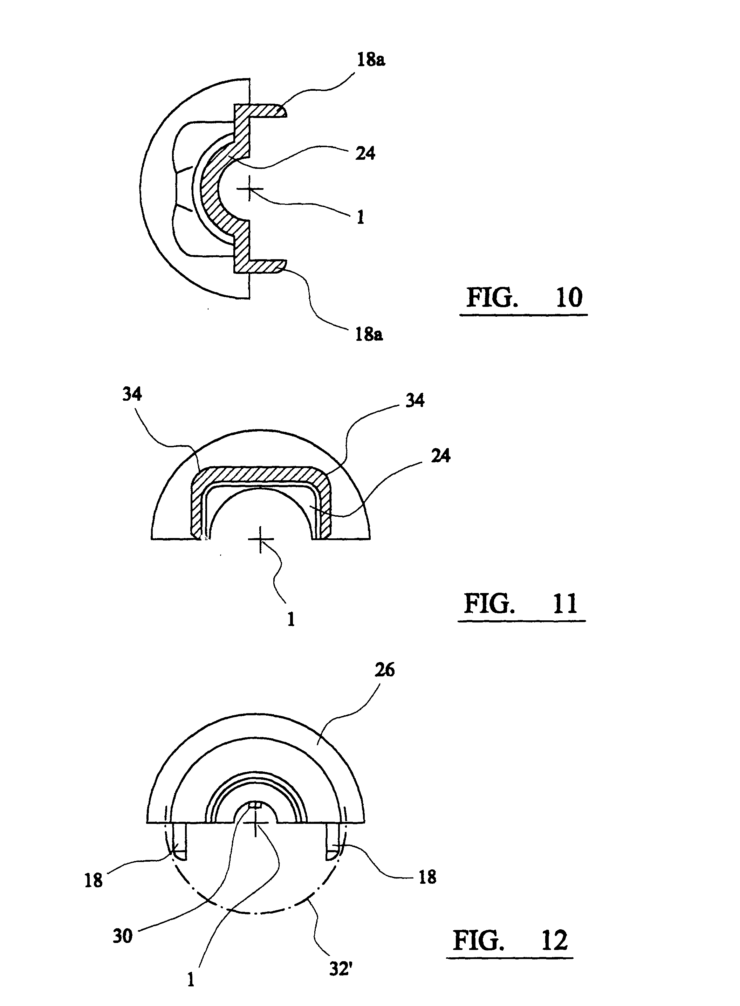

The mounting 10 is shown in figures 3 to 12. The mounting 10 comprises a moulding in black polypropylene formed as two mounting halves 12, 14 connected by hinge means 16. The moulding halves 12,14 are split about a longitudinal plane through a central axis 1 of the assembled mounting 10. The central axis 1 of the mounting 10 when the mounting 10 is assembled and fitted into the frame 44, is coaxial with the axis of the aperture 32 within the frame 44. The hinge means 16 interconnects the two halves 12,14 at one end of the respective halves 12,14 and allows the two halves 12,14 to hinge about a lateral axis 2 perpendicular to, and passing through, the longitudinal axis 1 of the mounting 10. The general profile and shape of the two halves 12,14 is generally symmetrical about a plane 2a perpendicular to the central axis 1, and hinge axis 2 and passing through the hinge means 16.

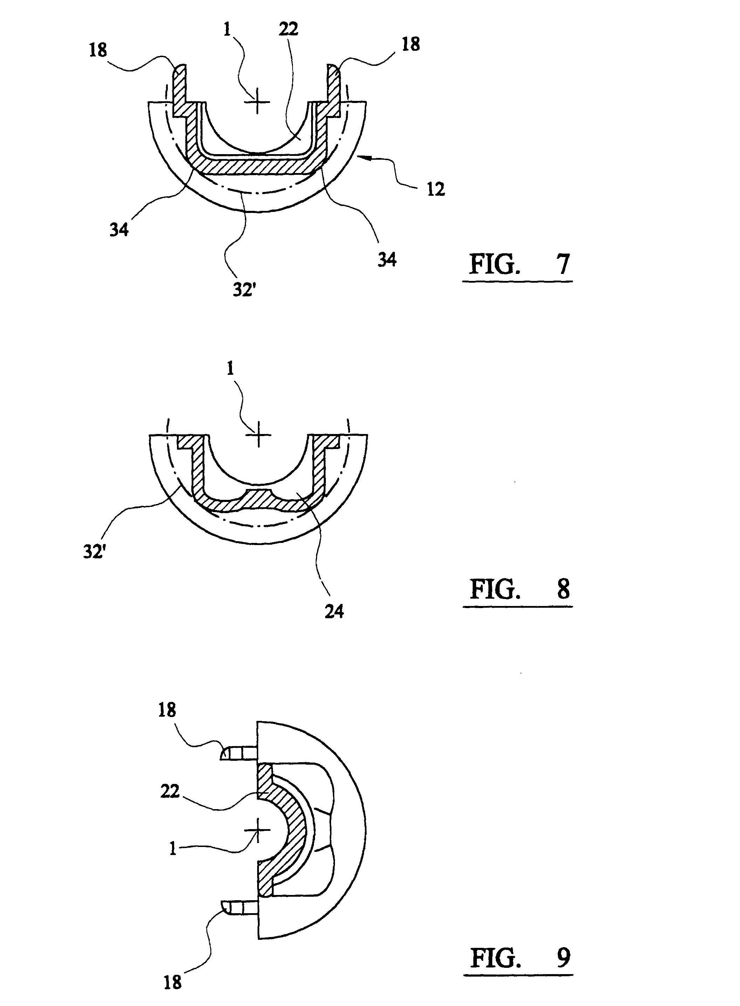

The mounting halves 12,14 have a cooperating corresponding lateral cross section, as shown in figure 7 to 12. When the mounting 10 is hinged about the hinge means 16 (as shown by arrow X in figure 3) to bring the two halves 12,14 together with the longitudinal faces of the two halves 12,14 abutting each other. In this assembled position the two halves 12,14 of the assembled mounting 10 are disposed facing each other about the central axis 1. In the assembled mounting 10 the hinge means 16 are disposed at one end rather than, as shown in the figures being located in the middle of the mounting assembly 10.

The hinge means 16 simply comprise a region and web of thin material between and interconnecting the two halves 12,14. The web and mounting 10 are arranged such that the mounting 10 can be folded along the web, and the web bent, to allow the two halves 12,14 to be pivoted together over and on top of each other.

Projecting snap-fit formations 18 and 18A are provided on the mounting halves 12,14 to be received in corresponding snap-fit receptors 20, 20A provided in respective facing mounting half 14,12. When snap-fitted together a microphone (not shown) is gripped at its head on its opposite sides by opposed internal portions and surfaces 22, 24 of the mounting halves 10, 12, while the head of the microphone is shielded by the upstanding head structure 26 of the mounting halves. The microphone is of a generally circular cross section and accordingly the internal surfaces and profile of the mounting halves 12,14 have a semi circular cross section, corresponding to that of the microphone. When the mounting halves 12,14 are closed the internal surfaces 22,24 together define a circular profile and tapering recess within which to receive the microphone.

The snap-fit formations 18 and 18A and corresponding snap-fit receptors 20, 20A provide an easy, convenient and simple means to hold the two halves 12,14 of the mounting 10 together around the microphone and to thereby secure the microphone within the mounting 10.

The mounting 10 comprising the two mounting halves 12,14 and hinge means 16 comprises a single interconnected unitary plastic structure. As such the mounting 10 is a relatively simple structure and can be economically produced by suitable moulding techniques known in the art. This can be contrasted with many prior energy isolating mountings which often comprise multiple elements of different materials which have to be attached to each other in order to form the mounting.

In use, the microphone and it associated cable or conductor is placed with its head on the gripping portion of the internal portions 22 or 24 of one of the mounting halves 12 or 14. The other half 14 or 12 is then brought towards it, and the two halves 12,14 are snap-fitted together, thereby gripping the head of the microphone and holding it firmly in a protected relationship thereto. The microphone cable passes lengthwise of the mounting halves 12,14 and through an opening 6 in the region of hinge means 16. When the mounting halves 12,14 are closed, the halves 12,14 thereby form a bushing for the microphone.

The microphone cable (not shown) is gripped between internally projecting portions 28 and 30 extending from the internal surfaces 22,24 of the mounting halves 12,14, thereby causing these to provide a strong mechanical link between the cable and the mounting 10 whereby tension applied to the cable is directly transferred to the mounting 10 and diverted from the cable connections of the microphone.

As shown in fig 7 the mounting 10, which when fitted to the microphone forms in effect a collet, is adapted to be a press fit into a mounting opening 32 in the support frame 44. The position of the mounting aperture 32 of the frame 44 is shown in figures 7,12,and 8 in relation to the mounting halves 12,14 by phantom circle line 32'. The mounting 10 which acts like a bushing provides contact at a plurality of spaced locations 34 (in this case four locations by virtue of the square cross section of the mounting halves 12,14). The bushing or mounting assembly 10 can thereby accommodate a degree of non-circularity of the opening 34 without prejudicing the accuracy of mounting.

A visible orientation mark (not shown) may also be provided on the mounting 10 to allow the mounting 10, and so microphone, to be correctly orientated about the central axis 1 when installed within the aperture 32 in the frame 44. Furthermore the mounting 10 may include a projection (not shown), extending outwards from the outside of the mounting 10 which engages a cooperatively shaped recess within the frame 44, and in particular within the aperture 32, so that the mounting 10 can only be fitted in the specified orientation. The outer profile of the aperture 32 and of the mounting 10 could also be cooperatively profiled to similarly ensure that the mounting 10 can only be fitted in the correct orientation. Such orientation features may be required within such systems 40 which use microphones which have differing responses and performance in differing directions. This however will depend upon the particular system 40, the way it calculates the position from the signals 41 and microphones/receivers used.

With systems 40 as described above, the beam or frame 44 to which the microphones are mounted will be subjected to the acoustic transmission from the transmitter means 48. The beam or frame 44 is a structural member and as such can be expected to be acoustically-transmissive. In other words the beam or frame can be expected to respond to the acoustic transmissions 41 and to transmit energy to the microphones mounted thereon through the frame structure 44 itself. Consequently conventionally the microphones are mounted to the frame 44 via suitable vibration damping means generally comprising an elastomeric material. A mounting using a non-elastomeric polymeric plastics material would normally have been expected not to provide vibration damping due to the different properties of such non elastomeric materials, and in particular the lack of natural resilience in such materials as compared to elastomeric materials. Accordingly a mounting 10 as described above using such materials, without any elastomeric material, would not generally have been considered as suitable. It has however been found in testing that the mounting 10 described above functions satisfactorily within systems 40 of the type described, and that the microphone, in use, is suitably isolated from the frame 44. Indeed in the tests such a mounting 10 performed slightly better than similar conventional rubber mountings. It is therefore believed that the previous conventional assumption that the microphones within such systems should be vibration isolated from the frame 44 is incorrect. A11 that is required is that the microphones are acoustically isolated from the frame 44.

Accordingly in use, the polypropylene material of the mounting 10 can, and does, serve to provide the required level of acoustic insulation to the microphone such that it can function correctly within the system 40, whilst also enabling it to be push fitted into its mounting beam or frame 44 in a convenient and easy manner.

Other similar non-elastomeric polymeric materials can be used instead of polypropylene. Such materials include, for example, nylon derivatives, acetyl, ABS and other non elastomers. Acetyl is the preferred material since this is less brittle at low temperatures (0°C) and is therefore more robust than polypropylene. Furthermore a hinge means 16 made from acetyl will last longer than one made from polypropylene. Nylon derivatives are less favoured due to their hygroscopic characteristics.

## Claims

1. A method of mounting an acoustic emitter or detector with respect to an acoustically-transmissive structural mounting member 44 and within acoustic transmission range of at least one further such emitter or detector for acoustic transmission therebetween and so that said mounted emitter or detector is removable for replacement by a like emitter or detector at its respective dimensionally/locationally-defined position, and so that said removable emitter or detector is at least partially isolated from said mounting member 44, said method comprising causing at least a portion of said emitter or detector to become held between opposed portions 12,14 of polymeric bushing means which in use is located between the emitter or detector and said structural mounting member 44, said polymeric bushing means each comprising location-defining structure for engagement with said structural mounting member 44, and an isolating structure to inhibit the transmission of energy between said structural mounting member and said acoustic emitter or detector:
**characterised by**
a) providing said location-defining structure and said isolating structure comprising a single unitary structure comprising a non-elastomeric polymeric plastics material to acoustically isolate said emitter or detector from said acoustically-transmissive structural mounting member; and
b) said bushing means comprising a structure comprising two main structual components respectively providing said opposed portions 12,14 of said polymeric bushing elements and adapted to snap-fit together on opposite sides of said acoustic emitter or detector.

2. A method of mounting an acoustic emitter or detector with respect to an acoustically transmissive structural mounting member 44 **characterised by** providing a location-defining and acoustically isolating structure comprising a single unitary structure comprising a non-elastomeric polymeric plastics material and said material providing opposed portions 12,14 of bushing means adapted to snap-fit together on opposite sides of said acoustic emitter or detector.

3. A method as claimed in claim 1 or 2 in which the acoustic emitter or detector, and the acoustically transmissive structural mounting member 44 form part of a system for three-dimensional coordinate determination, and the method provides a means for mounting the acoustic emitter or detector within said system.

4. A method as claimed in any preceding claim in which the non-elastomeric material is polypropylene.

5. A method as claimed in any one of claims 1 to 3 in which the non-elastomeric material is a nylon derivative.

6. A method as claimed in any one of claims 1 to 3 in which the non-elastomeric material is acetyl.

7. A mounting 10 for a sensor adapted to removably mount same with respect to a support 44 while at least partially acoustically, electrically or thermally isolating same from said support 44, **characterised by** said mounting 10 comprising a non-elastomeric polymeric plastic bushing element adapted to be a press fit into a mounting opening 32 in said support 44, and said bushing providing contact at a plurality of at least three spaced locations with respect to said mounting opening 32, whereby said bushing can accommodate a degree of non-circularity of said opening 32.

8. A mounting 10 for a sensor adapted to removably mount same with respect to a support 44 while at least partially acoustically, electrically or thermally isolating same from said support 44, **characterised by** said mounting 10 comprising non-elastomeric polymeric plastic bushing elements 12, 14 adapted to snap-fit or clip together to engage said sensor and form a mounting bushing therefor.

9. A mounting 10 according to claims 7 or 8 **characterised by** said bushing elements 12,14 being adapted to grip a longitudinal wire or the like conductor connected or connectable to said emitter or detector or sensor as well as said emitter or detector or sensor itself, whereby said bushing secures an end part of conductor relative to said emitter or detector so as to provide structure protecting said conductor and the emitter or detector or sensor against damage caused by tension in said conductor.

10. A mounting 10 according to any one of claims 7 to 9 **characterised by** said bushing elements 12, 14 being formed as end-to-end complementary elements formed integrally in one piece, and interconnected by hinge means 16.

11. A mounting 10 according to claim 10 further comprising an aperture 6 defined within the mounting in the region of the hinge means 16, said aperture 6 adapted to accommodate a wire or like conductor connected or connectable to said emitter or detector or sensor.

12. A mounting 10 as claimed in any one of claims 7 to 11 in which the non-elastomeric plastic is polypropylene.

13. A mounting 10 as claimed in any one of claims 7 to 11 in which the non-elastomeric plastic is a nylon derivative.

14. A mounting 10 as claimed in any one of claims 7 to 11 in which the non-elastomeric plastic is acetyl.

15. A mounting as claimed in any one of claims 7 to 14 in which the mounting 10 is adapted to mount a sensor or the like within a system for three-dimensional coordinate determination.

16. Apparatus 40 for mounting an acoustic emitter or detector with respect to an acoustically-transmissive structural mounting member 44 and within acoustic transmission range of at least one further such emitter or detector for acoustic transmission therebetween and so that said mounted emitter or detector is removable for replacement by a like emitter or detector at its respective dimensionally/locationally defined position, and so that said removable emitter or detector is at least partially isolated from said mounting member 44, said apparatus 40 comprising at least a portion of said emitter or detector being held between opposed portions 12,14 of polymeric bushing means which in use is located between the emitter or detector and said structural mounting member 44, said polymeric bushing means comprising location-defining structure for engagement with said structural mounting member 44, and an isolating structure to inhibit the transmission of energy between said structural mounting member 44 and said acoustic emitter or detector:
**characterised by**
a) providing said location-defining structure and said isolating structure comprising a single unitary structure comprising a non-elastomeric polymeric plastics material to acoustically isolate said emitter or detector from said acoustically-transmissive structural mounting member 44; and
b) said bushing means comprising a structure comprising two main structural components respectively providing said opposed portions 12,14 of said polymeric bushing means and adapted to snap-fit together on opposite sides of said acoustic emitter or detector.

17. Apparatus 40 for mounting an acoustic emitter or detector with respect to an acoustically transmissive structural mounting member 44 **characterised by** providing location-defining and energy isolating structural comprising a single unitary structure comprising a non-elastomeric polymeric plastics material to acoustically isolate said emitter or defector; and said material providing opposed portions 12, 14 of bushing means adapted to snap-fit together on opposite sides of said acoustic emitter or detector.

18. Apparatus 40 as claimed in claim 16 or 17 in which the non-elastomeric plastic is polypropylene.

19. Apparatus 40 as claimed in claim 16 or 17 in which the non-elastomeric plastic is a nylon derivative.

20. Apparatus 40 as claimed in claim 16 or 17 in which the non-elastomeric plastic is acetyl.

21. Apparatus 40 as claimed in any one of claims 16 to 20 in which the acoustic emitter or detector, and the acoustically transmissive structural mounting member 44 form part of a system for three-dimensional coordinate determination, and the apparatus 40 provides a means for mounting said emitter or detector with said system.

## Patentansprüche

1. Verfahren zur Montage eines akustischen Emitters oder Detektors relativ zu einem akustisch leitfähigen Montagebauteil (44) und innerhalb des akustischen Übertragungsbereichs wenigstens eines weiteren derartigen Emitters oder Detektors zur akustischen Übertragung zwischen beiden, wobei die Montage in einer solchen Weise erfolgt, dass sich der montierte Emitter oder Detektor wieder abnehmen lässt, um ihn an seiner jeweiligen hinsichtlich Ausrichtung/Lage festgelegten Position durch einen gleichartigen Emitter oder Detektor zu ersetzen, und dass der abnehmbare Emitter oder Detektor zumindest teilweise gegenüber dem Montagebauteil (44) isoliert wird, wobei das Verfahren beinhaltet, dass zumindest ein Abschnitt des Emitters oder Detektors zwischen einander gegenüberliegenden Abschnitten (12, 14) einer Polymerbuchse gehaltert wird, welche im Einsatz zwischen dem Emitter bzw. Detektor und dem Montagebauteil (44) angeordnet ist, wobei die Polymerbuchse jeweils eine die Position festlegende und mit dem Montagebauteil (44) in Eingriff kommende Struktur sowie eine Isolierstruktur zur Verhinderung einer Energieübertragung zwischen dem Montagebauteil und dem akustischen Emitter oder Detektor umfasst,
und wobei das Verfahren **dadurch gekennzeichnet ist, dass**
a) die die Position festlegende Struktur und die Isolierstruktur zur akustischen Isolierung des Emitters oder Detektors vom akustisch leitfähigen Montagebauteil in Form einer einzigen einheitlichen, ein nicht-elastomeres, polymeres Kunststoffmaterial umfassenden Struktur vorgesehen werden; und
b) die Buchse eine Struktur aufweist, welche zwei Hauptbauteilkomponenten umfasst, die jeweils einen der einander gegenüberliegenden Abschnitte (12, 14) der Polymerbuchsenelemente bilden und so ausgelegt sind, dass sie an entgegengesetzten Seiten des akustischen Emitters oder Detektors passgenau ineinander einschnappen können.

2. Verfahren zur Montage eines akustischen Emitters oder Detektors relativ zu einem akustisch leitfähigen Montagebauteil (44), wobei das Verfahren **dadurch gekennzeichnet ist, dass** eine die Position festlegende und eine akustische Isolierung bewirkende Struktur in Form einer einzigen einheitlichen Struktur ausgebildet ist, welche ein nicht-elastomeres polymeres Kunststoffmaterial umfasst, wobei dieses Material einander gegenüberliegende Buchsenabschnitte (12, 14) bildet, die so ausgelegt sind, dass sie an entgegengesetzten Seiten des akustischen Emitters oder Detektors passgenau ineinander einschnappen können.

3. Verfahren nach Anspruch 1 oder 2, wobei der akustische Emitter oder Detektor und das akustisch leitfähige Montagebauteil (44) Teile eines Systems zur dreidimensionalen Koordinatenbestimmung darstellen und das Verfahren die Montage des akustischen Emitters oder Detektors innerhalb dieses Systems ermöglicht.

4. Verfahren nach einem der vorhergehenden Ansprüche, wobei es sich bei dem nicht-elastomeren Material um Polypropylen handelt.

5. Verfahren nach einem der Ansprüche 1 bis 3, wobei es sich bei dem nicht-elastomeren Material um ein Nylon-Derivat handelt.

6. Verfahren nach einem der Ansprüche 1 bis 3, wobei es sich bei dem nicht-elastomeren Material um Azetyl handelt.

7. Halterung (10) für einen Sensor, wobei die Halterung so ausgelegt ist, dass sie den Sensor relativ zu einem Tragelement (44) abnehmbar haltert und ihn dabei zumindest teilweise akustisch, elektrisch oder thermisch von diesem Tragelement (44) isoliert, wobei die Halterung (10) **dadurch gekennzeichnet ist, dass** sie ein Buchsenelement aus einem nicht-elastomeren, polymeren Kunststoff umfasst, das so ausgelegt ist, dass es sich in einen Sitz in einer Montageöffnung (32) des Tragelementes (44) einpressen lässt, wobei die Buchse an mehreren von wenigstens drei zueinander beabstandeten Stellen mit der Montageöffnung (32) in Kontakt kommt und so ein Abweichen der Form der Öffnung (32) von der Kreisform in gewissem Umfang ausgleichen kann.

8. Halterung (10) für einen Sensor, welche so ausgelegt ist, dass sie den Sensor relativ zu einem Tragelement (44) abnehmbar haltert und ihn dabei zumindest teilweise akustisch, elektrisch oder thermisch gegenüber dem Tragelement (44) isoliert, wobei die Halterung (10) **dadurch gekennzeichnet ist, dass** sie Buchsenelemente (12, 14) aus einem nicht-elastomeren, polymeren Kunststoff umfasst, welche so ausgelegt sind, dass sie passgenau ineinander einschnappen oder einrasten und so mit dem Sensor in Eingriff kommen und für diesen eine Montagebuchse bilden können.

9. Halterung (10) nach Anspruch 7 oder 8, **dadurch gekennzeichnet, dass** die Buchsenelemente (12, 14) so ausgelegt sind, dass sie außer dem Emitter, Detektor oder Sensor selbst zusätzlich einen länglichen Draht oder einen ähnlichen Leiter erfassen, der mit dem Emitter, Detektor oder Sensor verbunden ist oder verbunden werden kann, wodurch die Buchse einen Endabschnitt des Leiters relativ zum Emitter oder Detektor festlegt und so eine Struktur zum Schutz des Leiters und des Emitters, Detektors oder Sensors gegen eine Beschädigung durch im Leiter auftretende Spannungen bietet.

10. Halterung (10) gemäß einem der Ansprüche 7 bis 9, **dadurch gekennzeichnet, dass** die Buchsenelemente (12, 14) als an ihren einander zugewandten Enden zueinander komplementär geformte Elemente ausgebildet sind, welche zu einem einzigen Bauteil integriert und durch Scharniermittel (16) miteinander verbunden sind.

11. Halterung (10) gemäß Anspruch 10, zusätzlich enthaltend eine Öffnung (6), welche innerhalb der Halterung im Bereich der Scharniermittel (16) vorgesehen ist, wobei die Öffnung (6) so ausgelegt ist, dass sie einen Draht oder einen ähnlichen Leiter aufnehmen kann, der mit dem Emitter, Detektor oder Sensor verbunden ist oder mit diesem verbunden werden kann.

12. Halterung (10) nach einem der Ansprüche 7 bis 11, wobei es sich bei dem nicht-elastomeren Kunststoff um Polypropylen handelt.

13. Halterung (10) nach einem der Ansprüche 7 bis 11, wobei es sich bei dem nicht-polymeren Kunststoff um ein Nylon-Derivat handelt.

14. Halterung (10) nach einem der Ansprüche 7 bis 11, wobei es sich bei dem nicht-elastomeren Kunststoff um Azetyl handelt.

15. Halterung nach einem der Ansprüche 7 bis 14, wobei die Halterung (10) so ausgelegt ist, dass sich mit ihr ein Sensor oder ähnliches innerhalb eines Systems zur dreidimensionalen Koordinatenbestimmung montieren lässt.

16. Vorrichtung (40) zur Montage eines akustischen Emitters oder Detektors relativ zu einem akustisch leitfähigen Montagebauteil (44) und innerhalb des akustischen Übertragungsbereichs wenigstens eines weiteren derartigen Emitters oder Detektors zur akustischen Übertragung zwischen beiden, wobei die Montage in einer solchen Weise erfolgt, dass sich der montierte Emitter oder Detektor wieder abnehmen lässt, um ihn an seiner jeweiligen hinsichtlich Ausrichtung/Lage festgelegten Position durch einen gleichartigen Emitter oder Detektor zu ersetzen, und dass der abnehmbare Emitter oder Detektor zumindest teilweise gegenüber dem Montagebauteil (44) isoliert wird, wobei bei dieser Vorrichtung zumindest ein Abschnitt des Emitters oder Detektors zwischen einander gegenüberliegenden Abschnitten (12, 14) einer Polymerbuchse gehaltert wird, welche im Einsatz zwischen dem Emitter bzw. Detektor und dem Montagebauteil (44) angeordnet ist, wobei die Polymerbuchse jeweils eine die Position festlegende und mit dem Montagebauteil (44) in Eingriff kommende Struktur sowie eine Isolierstruktur zur Verhinderung einer Energieübertragung zwischen dem Montagebauteil und dem akustischen Emitter oder Detektor umfasst,
und wobei die Vorrichtung **dadurch gekennzeichnet ist, dass**
a) die die Position festlegende Struktur und die Isolierstruktur zur akustischen Isolierung des Emitters oder Detektors vom akustisch leitfähigen Montagebauteil (44) in Form einer einzigen einheitlichen, ein nicht-elastomeres, polymeres Kunststoffmaterial umfassenden Struktur vorgesehen werden; und
b) die Buchse eine Struktur aufweist, welche zwei Hauptbauteilkomponenten umfasst, die jeweils einen der einander gegenüberliegenden Abschnitte (12, 14) der Polymerbuchse bilden und so ausgelegt sind, dass sie an entgegengesetzten Seiten des akustischen Emitters oder Detektors passgenau ineinander einschnappen können.

17. Vorrichtung (40) zur Montage eines akustischen Emitters oder Detektors relativ zu einem akustisch leitfähigen Montagebauteil (44), wobei die Vorrichtung **dadurch gekennzeichnet ist, dass** eine die Position festlegende und eine Energie-Isolierung bietende Struktur zusammen als eine einzige einteilige Struktur ausgebildet sind, die ein nicht-elastomeres polymeres Kunststoffmaterial umfasst und den Emitter oder Detektor akustisch isoliert, und dass das Material einander gegenüberliegende Abschnitte (12, 14) von Buchsen bildet, welche so ausgelegt sind, dass sie an entgegengesetzten Seiten des akustischen Emitters oder Detektors passgenau ineinander einschnappen können.

18. Vorrichtung (40) nach Anspruch 16 oder 17, wobei es sich bei dem nichtetastomeren Kunststoff um Polypropylen handelt.

19. Vorrichtung (40) nach Anspruch 16 oder 17, wobei es sich bei dem nicht-elastomeren Kunststoff um ein Nylon-Derivat handelt.

20. Vorrichtung (40) nach Anspruch 16 oder 17, wobei es sich bei dem nicht-elastomeren Kunststoff um Azetyl handelt.

21. Vorrichtung (40) nach einem der Ansprüche 16 bis 20, wobei der akustische Emitter oder Detektor und das akustisch leitfähige Montagebauteil (44) Teile eines Systems zur dreidimensionalen Koordinatenbestimmung darstellen und die Vorrichtung (40) ein Mittel zur Montage des Emitters oder Detektors in diesem System bildet.

## Revendications

1. Procédé de montage d'un émetteur ou détecteur acoustique par rapport à un élément de montage structurel acoustiquement transmissif (44) et dans une plage de transmission acoustique d'au moins un autre émetteur ou détecteur semblable, pour transmission acoustique entre eux et de sorte que le dit émetteur ou détecteur monté est amovible pour remplacement par un émetteur ou détecteur semblable à sa position respective définie en dimension / emplacement, et de sorte que le dit émetteur ou détecteur amovible est au moins partiellement isolé du dit élément de montage (44), le dit procédé comprenant le maintien d'au moins une portion du dit émetteur ou détecteur entre des parties opposées (12, 14) d'un élément d'entourage en polymère qui est placé, en utilisation, entre l'émetteur ou le détecteur et le dit élément de montage structurel (44), le dit élément d'entourage en polymère comprenant chacun une structure de définition de position pour engagement avec le dit élément de montage structurel (44), et une structure d'isolation pour empêcher la transmission d'énergie entre le dit élément de montage structurel et le dit émetteur ou détecteur acoustique,
**caractérisé en ce que** :
(a) la dite structure de définition de position et la dite structure d'isolation sont sous la forme d'une structure solidaire unique comprenant une matière plastique polymère non élastomère pour isoler acoustiquement le dit émetteur ou détecteur du dit élément de montage structurel acoustiquement transmissif ; et
(b) le dit élément d'entourage comprend une structure comportant deux composants structurels principaux qui constituent respectivement les dites parties opposées (12, 14) du dit élément d'entourage en polymère et qui peuvent s'enclencher mutuellement sur des côtés opposés du dit émetteur ou détecteur acoustique.

2. Procédé de montage d'un émetteur ou détecteur acoustique par rapport à un élément de montage structurel acoustiquement transmissif (44), **caractérisé par** la préparation d'une structure de définition de position et d'isolation acoustique comprenant une structure solidaire unique en une matière plastique polymère non élastomère, et la dite matière constituant des parties opposées (12, 14) d'un élément d'entourage prévues pour s'enclencher mutuellement sur des côtés opposés du dit émetteur ou détecteur acoustique.

3. Procédé selon la revendication 1 ou 2, dans lequel l'émetteur ou détecteur acoustique et l'élément de montage structurel acoustiquement transmissif (44) font partie d'un système pour une détermination de coordonnées tridimensionnelles, et le procédé procure un moyen de montage de l'émetteur ou détecteur acoustique dans le dit système.

4. Procédé selon une quelconque des revendications précédentes, dans lequel la matière non élastomère est un polypropylène.

5. Procédé selon une quelconque des revendications 1 à 3, dans lequel la matière non élastomère est un dérivé de nylon.

6. Procédé selon une quelconque des revendications 1 à 3, dans lequel la matière non élastomère est de type acétyl.

7. Monture (10) pour un détecteur, permettant de fixer de façon amovible le détecteur par rapport à un support (44) tout en isolant au moins en partie acoustiquement, électriquement ou thermiquement le détecteur du dit support (44), **caractérisée en ce que** la dite monture (10) comprend un élément d'entourage en matière plastique polymère non élastomère qui peut être emmanché par pression dans un trou de montage (32) prévu dans le dit support (44), et le dit élément d'entourage assure un contact à une pluralité d'au moins trois endroits espacés avec le dit trou de montage (32), de sorte que le dit élément d'entourage peut accepter un certain degré de non circularité du dit trou (32).

8. Monture (10) pour un détecteur, prévue pour fixer de façon amovible le détecteur par rapport à un support (44) tout en isofant au moins en partie acoustiquement, électriquement ou thermiquement ce détecteur du dit support (44), **caractérisée en ce que** la dite monture (10) comprend des éléments d'entourage en matière plastique polymère non élastomère (12, 14) prévus pour s'enclencher élastiquement ou s'agrafer mutuellement de manière à venir en contact avec le dit détécteur et à former un entourage de montage pour celui-ci.

9. Monture (10) selon la revendication 7 ou 8, **caractérisée en ce que** les dits éléments d'entourage (12, 14) peuvent saisir un fit longitudinal ou le conducteur analogue connecté ou connectable au dit émetteur ou détecteur ou capteur, ainsi que le dit émetteur ou détecteur ou capteur lui-même, de sorte que le dit entourage fixe une partie d'extrémité du conducteur par rapport au dit émetteur ou détecteur de manière à constituer une structure protégeant le dit conducteur et l'émetteur ou détecteur ou capteur contre une détérioration provoquée par une traction sur le dit conducteur.

10. Monture (10) selon une quelconque des revendications 7 à 9, **caractérisée en ce que** les dits éréments d'entourage (12, 14) sont sous la forme d'éléments complémentaires bout à bout formés solidairement en une seule pièce et interconnectés par une articulation (16).

11. Monture (10) selon la revendication 10, comprenant en outre une ouverture (6) définie dans la monture dans la région de l'articulation (16), la dite ouverture (6) pouvant recevoir un fil ou un conducteur analogue connecté ou connectable au dit émetteur ou détecteur ou capteur.

12. Monture (10) selon une quelconque des revendications 7 à 11, dans laquelle la matière plastique non élastomère est un polypropylène.

13. Monture (10) selon une quelconque des revendications 7 à 11, dans laquelle la matière plastique non élastomère est un dérivé de nylon.

14. Monture (10) selon une quelconque des revendications 7 à 11, dans laquelle la matière plastique non élastomère est de type acétyl.

15. Monture selon une quelconque des revendications 7 à 14, dans laquelle la monture (10) est prévue pour le montage d'un capteur ou analogue dans un système de détermination de coordonnées tridimensionnelles.

16. Appareil (40) pour le montage d'un émetteur ou détecteur acoustique par rapport à un élément de montage structurel acoustiquement transmissif (44) et dans une plage de transmission acoustique d'au moins -un autre émetteur ou détecteur semblable, pour transmission acoustique entre eux, et de sorte que le dit émetteur ou détecteur monté est amovible pour remplacement par un émetteur ou détecteur semblable, à sa position respective définie en dimension / emplacement, et de sorte que le dit émetteur ou détecteur amovible est au moins en partie isolé du dit élément de montage (44), le dit appareil (40) comprenant au moins une portion du dit émetteur ou détecteur ténue entre des parties opposées (12, 14) d'un élément d'entourage en polymère, qui est placé en utilisation entre l'émetteur ou détecteur et le dit élément de montage structurel (44), le dit élément d'entourage en polymère comprenant une structure de définition de position pour couplage avec le dit élément de montage structurel (44) et une structure d'isolation pour empêcher la transmission d'énergie entre le dit élément de montagne structurel (44) et le dit émetteur ou détecteur acoustique :
**caractérisé en ce que** :
(a) la dite structure de définition de position et la dite structure d'isolation constituent une structure solidaire unique en matière plastique polymère non élastomère pour isoler acoustiquement le dit émetteur ou détecteur du dit élément de montage structurel acoustiquement transmissif (44) ; et
(b) le dit élément d'entourage comprend une structure comportant deux composants structurels principaux qui définissent respectivement les dites parties opposées (12, 14) du dit élément d'entourage en polymère et qui sont prévus pour s'enclencher mutuellement sur des côtés opposés du dit émetteur ou détecteur acoustique.

17. Appareil (40) pour le montage d'un émetteur ou détecteur acoustique par rapport à un élément de montage structurel acoustiquement transmissif (44), **caractérisé en ce qu'**il comprend une structure de définition de position et d'isolation d'énergie constituant une structure solidaire unique en matière plastique polymère non élastomère afin d'isoler acoustiquement le dit émetteur ou dêtecteur ; et la dite matière formant des parties opposées (12, 14) de l'élément d'entourage qui peuvent s'enclencher mutuellement sur des côtés opposés du dit émetteur ou détecteur acoustique.

18. Appareil (40) selon la revendication 16 ou 17, dans lequel la matière plastique non élastomère est un polypropylène.

19. Appareil (40) selon la revendication 16 ou 17, dans lequel la matière plastique non élastomère est un dérivé de nylon.

20. Appareil (40) selon la revendication 16 ou 17, dans lequel la matière plastique non élastomère est de type acétyt.

21. Appareil (40) selon une quelconque des revendications 16 à 20, dans lequel l'émetteur ou détecteur acoustique et l'élément de montage structurel acoustiquement transmissif (44) font partie d'un système de détermination de coordonnées tridimensionnelles, et l'appareil (40) procure un moyen de montage du dit émetteur ou détecteur dans le dit système.
